(19)

Europäisches
Patentamt
European
Patent Office
Office européen
des brevets

(11) **EP 2 597 539 A1**

(12) **EUROPEAN PATENT APPLICATION**

(43) Date of publication:
**29.05.2013 Bulletin 2013/22**

(51) Int Cl.:
***G05B 13/04*** *(2006.01)*

(21) Application number: **11190237.5**

(22) Date of filing: **23.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventor: **Nguyen, Tu Duc
7012 Trondheim (NO)**

(54) **Defining and using an ARMAX model for controlling a technical process**

(57) It is described a method and an arrangement for defining an ARMAX model for deriving a predicted output signal (235, $y_t$), the ARMAX model being parametrized by a parameter set, the method comprising: obtaining an input signal (105, 205, $\{U(t_i), Y(t_i)\}$); adapting the parameter set (213, $\{a_i\}, \{b_i\}, \{c_i\}, \theta$) using differential evolution, in order to obtain an optimized parameter set.

FIG 2

EP 2 597 539 A1

**Description**

**Field of invention**

The present invention relates to a method and to an arrangement for defining an ARMAX model for deriving a predicted output signal, and also to a method for controlling and/or performing a technical process using the defined ARMAX model.

**Background**

In the maritime industry, in particular during oil exploration or gas exploration or oil delivery or gas delivery a number of processes, such as separation processes, heat exchange processes, valve control processes, motor control or motor drive processes or cooling processes need to be performed.

For example, a valve opening position may be controlled such as to allow flow through of a particular desired flow rate. Thereby, the valve opening position to be set in order to achieve the desired flow rate may be unknown. In particular, the valve opening position resulting in the desired flow rate may depend on a number of factors, in particular also on conditions at previous time points. Another example may be a heat exchange process, wherein a desired temperature of a substance to be tempered needs to be achieved, while another working substance having another predetermined temperature is available for the tempering. In particular, one or more valve positions controlling flow rates of the different substances need to be controlled, in order to achieve the desired temperature for the substance to be tempered.

Thereby, in order to determine the value of the control variable (in particular or for example valve opening position) to achieve a particular value of an output variable (for example a desired flow rate or a temperature) a physical/ mathematical model may be designed.

Thereby, in particular the ARMAX model is known which derives a predicted output variable or predicted output signal from previous output signals, a manipulable variable and a noise term. In statistics and signal processing, autoregressive-moving-average (ARMA) models are typically applied to auto-correlated time series data. Given a time series of data Xt, the ARMA model is a tool for predicting future values in this series. The model consists of two parts, an autoregressive (AR) part and a moving average (MA) part.

Thereby, the ARMAX model is at least partially defined or definable by a parameter set representing coefficients of different terms from which sum the predicted output variable (at a particular time point) is calculated. In order to accurately model the technical process it is necessary to determine the parameter set.

However, it has often be observed, that determining the parameter set is difficult or is not accurate enough, in order to appropriately model the physical process.

**Summary of the Invention**

There may be a need for a method and arrangement for defining an ARMAX model for deriving a predicted output signal, and there may also be a need for a method for controlling and/or performing a technical process using the thus defined ARMAX model, wherein the deficiencies mentioned above are at least partially overcome.

This need may be met by the subject matter according to the independent claims. Advantageous embodiments of the present invention are described by the dependent claims.

According to an embodiment of the present invention it is provided a method for defining an ARMAX model for deriving a predicted output signal, the ARMAX model being parametrized by a parameter set, the method comprising obtaining an input signal, and adapting the parameter set using differential evolution, in order to obtain an optimized parameter set.

The ARMAX model may be defined by specifying the parameter set and also specifying orders of the ARMAX model specifying a range of summations over which different variables are summed regarding a number of time points.

The ARMAX model may be a mathematical model chosen to describe the physical system under consideration. The parameter set may for example comprise one to one hundred parameters, in particular five to twenty parameters. The parameters may indicate weights of the different variables at different time points prior to the considered time point, at which the predicted output signal or predicted signal is to be determined.

The input signal may for example be represented by an electrical/optical/wireless signal. The input signal may comprise one or more components representing measurement signals characterizing the physical system under consideration. The ARMAX model may in particular be designed to describe or predict the behaviour of the physical process or physical system under consideration.

The input signal may comprise for example one or more measurement values of a manipulatable variable and also of a measured output variable or measured output signal. In particular, the ARMAX model may provide a predicted output signal or predicted output variable that resembles (or is very similar to) the measured output signal. If the predicted output signal or predicted output variable resembles (or is very similar or has a very small difference to) the measured output signal or measured output variable the ARMAX model accurately reflects the physical behaviour of the system under consideration.

In order to achieve the predicted output signal to be similar or to resemble the measured output signal the parameter set is changed and in particular adapted to minimize a deviation between the predicted output signal and the measured output signal. Thereby, the adapting the parameter set is performed using differential evolution.

Thereby differential evolution (DE) may be considered as a method that optimizes the parameter set by iteratively trying to improve a candidate solution with regard to a given measure of quality. Finding the parameter set for the ARMAX model may be formulated as an optimization task where the objective is to find a model and a set of parameters that minimize the prediction error between the measured data (the measured output signal) and the predicted output signal.

Differential evolution algorithms may be considered as a stochastic direct-search optimization method and may have the capacity to handle non-differentiable, non-linear and multi model cost functions. Thereby, the algorithms consist of four basic steps: 1. initialization; 2. mutation; 3. crossover; and 4. selection. First, a fixed number of vectors (each vector comprising one parameter set) which forms a population are randomly initialized. This set of vectors contains potential solutions within an n-dimensional search space, wherein n is the number of vectors or the number of components in each vector. Next, this population evolves over time (thereby changing the components of each vector or some of the vectors) to explore the search space and to try to locate the minimum of a cost function measuring a deviation between the predicted output signal or output variable and the measured output variable.

At every iteration which may also be called generation new vectors may be generated by the combination of vectors randomly chosen from the current population (this process sometimes being referred to "mutation"). The resulting vectors may be then mixed with a predetermined target vector. This operation is also sometimes called "recombination" or "crossover" and produces the trial vector. Finally, the trial vector is accepted for the next generation, if and only if it yields a reduction in the value of the cost function (this step being referred to as "selection").

There may be several versions of performing the differential evolution in order to adapt the parameter set to minimize the value of the cost function. These different versions may differ in the manner how the new solution is generated from a current or a present population. In particular, the classic version (DE/ rand/ 1 /bin) is presented and used to adapt the parameter set. In this short hand notation, the first term after "DE" specifies how the base vector is chosen and it means that the base vectors are randomly chosen (rand). The following number (here 1) indicates how many vector differences are used. Thus in the exemplary embodiment one vector difference is used. The DE version that uses uniform crossover is appended with the additional term "bin" for "binomial" or uniform distribution.

Using differential evolution to adapt the parameter such as to minimize the cost function may be a cost-effective way and may adapt the parameter set such that the deviation between the predicted output signal and the measured output signal (a portion of the input signal) is minimized.

According to an embodiment of the present invention the ARMAX model derives the predicted output signal at the time index according to the equation

$$y_t = -\sum_{i=1}^{n_A} a_i y_{t-i} + \sum_{i=1}^{n_B} b_i u_{t-i-\theta} + e_t + \sum_{i=1}^{n_C} c_i e_{t-i} \; ,$$

wherein $u_{t-i-\theta}$ is a manipulated variable at time index t-i-$\theta$, and $e_{t-i}$ is an error term at time index t-i, wherein ($\{a_i\}$, $\{b_i\}$, $\{c_i\}$, $\theta$) form the parameter set of the ARMAX model, wherein $n_A$, $n_B$, $n_C$ represent orders of the ARMAX model, wherein $\theta$ represents a time delay.

The variable u may for example be a valve opening position when for example a heat exchange process is under consideration. The predicted signal or predicted output signal may for example be a temperature of liquid inside the heat exchanger which is to be tempered using the heat exchanger. In particular, the input signal may represent a training data set of measurement values comprising the manipulatable variable us as well as the measured output variable. Thereby, these variables may be provided for different time point in order to describe a time evolution of the variables.

The error term e may reflect all different kinds of process errors or measurement errors. The parameter set may comprise the coefficients $\{a_i\}$, the coefficients $\{b_i\}$, the coefficients $\{C_i\}$ and the time delay $\theta$. The orders $n_A$, $n_B$, $n_C$ of the ARMAX model define the ranges of the summations. Thereby, the number of considered time point may be definable or the range of the considered time points previous to the current time point for which the predicted signal is derived, may be specified. Thereby, a great flexibility for setting up the ARMAX model is provided which enables to more accurately model the physical process under consideration.

According to an embodiment of the present invention the adapting the parameter set comprises initializing the parameter set and/or mutating the parameter set and/or performing a crossover of parameters of the parameter set and/or selecting mutated parameters. Initializing the parameter set may comprise initializing each one of the parameters comprised in the parameter set. Mutating the parameter set may comprise mutating each parameter comprised in the parameter set. Thereby, the mutating may involve changing one parameter or all parameter or a number of parameters comprised in the parameter set. Thereby, the changing may depend on one or more other parameter sets. The selecting mutated parameters may depend on whether a deviation between the predicted output signal and the measured output signal (a portion of the input signal) becomes less or more. Thereby, the adapting the parameter set may be performed in a simple and reliable manner. Further, it may be ensured that the best or optimized parameter set may be found.

According to an embodiment of the present invention the method further comprises considering and/or setting a plurality of parameter sets, wherein each parameter set enables to define a parametrized model from which a corresponding predicted output signal can be derived. Considering a plurality of parameter sets may enable to mutate a single parameter set using one or more other parameter sets of the plurality of parameter sets. For example, performing a crossover of parameters of one parameter set to parameters of another parameter set is thus enabled. Thereby, it may be easier to find the optimal parameter set.

According to an embodiment of the present invention the adapting the parameter set comprises solving an optimization problem, in particular by minimizing a cost function, the cost function being dependent on a difference between the predicted output signal of the model parametrized with one of the plurality of parameter sets and a portion of the input signal.

The portion of the input signal may correspond to a measured output signal. The measured output signal may be comprised in the training set comprising the manipulatable variable and the measured output variable. By formulating the adaptation of the parameter set or the process of adaptation of the parameter set as an optimization problem the optimized parameter set may reliably be found or determined. Further, by using the difference, the cost function may be simplified for simplifying the entire method.

According to an embodiment of the present invention the portion of the input signal comprises measurement information across plural different time points and the predicted signal comprises prediction information across the plural different time points. Considering measurement information across plural time points may enable to more accurately predict the output signal, since a number of previous time points are considered which may result in a higher accuracy of the predicted output signal. In particular, the predicted signal may be predicted for a number of different time points.

According to an embodiment of the present invention the cost function is proportional to a norm of the difference, in particular an Euclidian norm.

Thereby, the cost function may be derived in a simple manner using conventional mathematical operations.

According to an embodiment of the present invention the setting the plurality of parameter sets comprises randomly setting parameters comprised in each parameter set within predetermined bounds.

The predetermined bounds may be based on plausible physical considerations which may restrict the parameters in the parameter sets to particular value ranges. When the parameters are randomly set, it may be ensured that all different values of the parameters within the predetermined bounds may be considered during the optimization procedure. Thereby, it may be ensured that the true minimum of the cost function may be found.

According to an embodiment of the present invention the adapted parameter set is selected, if the cost function evaluated on the adapted parameter set is smaller than the cost function evaluated on the parameter set before the adapting.

If the adapted parameter set is only selected (for the next generation), if the cost function evaluated on the adapted parameter set is smaller than the cost function evaluated on the parameter set before the adapting, it may be ensured that the next generation comprises parameter sets that on average decrease the cost function, in order to approach the optimized parameter set which reproduces the measured output signal in the most accurate way.

According to an embodiment of the present invention the adapting the parameter set comprises adding a uniformly distributed random variable to at least one parameter comprised in the parameter set to obtain a mutated parameter.

Adding the uniformly distributed random variable may allow that all possible parameter values are explored during the optimization process. Thereby, the accuracy of the method may further be improved.

According to an embodiment of the present invention the adapting the parameter set comprises changing all parameters comprised in the parameter set. Thereby, the method may be accelerated.

According to an embodiment of the present invention it is provided a method for controlling and/or performing a technical process during oil drilling/exploration/delivery and/or gas drilling/exploration/delivery, in particular offshore, and/or subsea and/or maritime exploration using the model as defined according to one of the embodiments described above.

Thereby, the technical process may be controlled in a more effective and accurate manner.

According to an embodiment of the present invention the technical process is a delivery process and/or a separation process and/or a heat exchange process and/or a valve control process and/or a motor drive process and/or a cooling process. The delivery process may for example involve setting opening positions of one or more valves in order to achieve one or more particular desired flow rates of one or more particular fluids or liquids or gases. The separation process may for example comprise separating one, two or more components from each other which are previously mixed. In particular, oil may be separated from water, in particular sea water and/or air. Further, loose gravel or sand may be separated from oil and/or water. In particular, solid particles may be separated from liquid or gaseous material.

The heat exchange process may use a heat exchanger, wherein a particular substance to be tempered (cooled or heated) exchanges heat with the heat exchanger and a working substance, such as a working fluid (such as flowing within a heat exchange pipe or tubing) also exchanges heat with the heat exchanger, wherein the substance and the working substance are physically separated from each other, such as by a wall. The valve control process may involve setting opening positions of one or more valves, in order to regulate or adjust a flow rate or a gas, a liquid or a mixture of a gas and a liquid of the working fluid or the fluid to be tempered.

The motor drive process may e.g. involve supplying a particular current or a particular power to the motor in order to achieve a predetermined desired motor torque at a motor shaft. The cooling process may also use a heat exchanger to cool or heat a substance to a predetermined desired temperature using another working fluid, wherein the working fluid and the substance are in heat exchange contact with the heat exchanger.

Thereby, many processes which are to be performed during oil drilling/exploration/delivery and/or gas drilling/exploration/delivery may accurately be performed.

According to an embodiment of the present invention a controller for controlling a technical process is provided, wherein the controller applies an ARMAX model defined according to a method according to an embodiment of the present invention to control the technique process.

It should be understood that features which are individually or in any combination disclosed, described, applied or employed for a method for defining an ARMAX model for deriving a predicted output signal may also be applied to employed for or used for an arrangement for defining an ARMAX model for deriving a predicted output signal according to an embodiment of the present invention and vice versa.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

Embodiments of the present invention are now described with reference to the accompanying drawings. The invention is not restricted to the illustrated or described embodiments.

**Brief Description of the Drawings**

Fig. 1    schematically illustrates a method for controlling a technical process according to an embodiment of the present invention using an arrangement and a method for defining an ARMAX model according to an embodiment of the present invention;

Fig. 2    schematically illustrates an arrangement and a method for defining an ARMAX model for deriving a predicted output signal according to an embodiment of the present invention;

Fig. 3    schematically illustrates a technical process to which a method according to an embodiment of the present invention is applied; and

Fig. 4    illustrates a graph illustrating the performance of a method according to an embodiment of the present invention; and

**Detailed description**

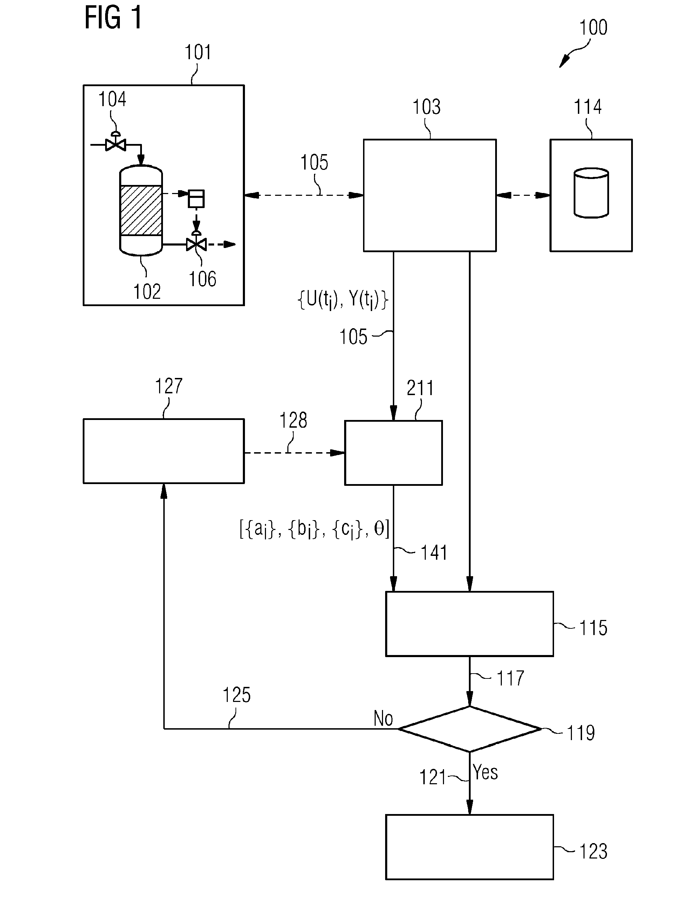

Fig. 1 schematically illustrates a arrangement/method scheme 100 for controlling a technical process 101 which in this case is a heat exchange process. In the heat exchange process 101 heat of a working fluid is exchanged with a heat exchanger 102, wherein a flow rate of the working fluid is controlled by a valve 104. The working fluid tempers the heat exchanger 102 to a particular temperature and a liquid to be tempered is run through the heat exchanger 102 and exits via the valve 106. The liquid to be tempered is to be heated or cooled to a particular desired temperature.

It turns out that the temperature of the output liquid depends on a number of experimental conditions such as on the opening positions of the valves 104 and 106 and on the temperature of the working fluid being in heat exchange with the heat exchanger 102.

Therefore, the information management system 103 gathers measurement data 105 from the heat exchange process 101, in particular gathers an input signal or measurement data 105 comprising the valve opening positions U $(t_i)$ for different time points $t_i$ and also the temperature Y $(t_i)$ of the output liquid flowing out of the heat exchanger 102. The measurement signal 104 is supplied to a model identification block 111 to which a current model structure 128 is supplied from a module 127.

The model identification block 111 outputs an optimized parameter set 141 which defines the ARMAX model whose structure is defined in the block 127 and is supplied as model 128.

A validation block 115 validates the optimized parameter set 141 (and also the entire model) supplied from the system identification block 111 and outputs a validation result 117 to a decision block 119 which decides, whether the parameter set 141 is good enough to reproduce the input signal 105. If this is the case, the decision block 119 branches to the branch 121 and indicates in an indication block 123 that the parameter set 141 is accepted and thus outputs the optimized parametrization of the model structure 127.

If the decision block 119 decides that the model parametrized by the parameter set 141 is not accurate enough (in particular it does not reproduce the input signal 105 good enough), then it is branched into the section 125 which leads to the model structure definition block 127 again. In this case, the underlying model or the model structure may be altered, for example by modifying the order of the model or adding new terms to the model. The altered model which becomes the current model 128 is supplied to the model identification block 111 which will be further described in more detail below. In particular, the model structure 128 is given by:

$$y_t = -\sum_{i=1}^{n_A} a_i y_{t-i} + \sum_{i=1}^{n_B} b_i u_{t-i-\theta} + e_t + \sum_{i=1}^{n_C} c_i e_{t-i} \; ,$$

wherein $u_{t-i-\theta}$ is a manipulated variable at time index $t-i-\theta$, and $e_{t-i}$ is an error term at time index $t-i$,
wherein $(\{a_i\}, \{b_i\}, \{c_i\}, \theta)$ form the parameter set of the ARMAX model,
wherein $n_A$, $n_B$, $n_C$ represent orders of the ARMAX model, wherein $\theta$ represents a time delay.

In particular, it is assumed that measurement data 105 from the actuators of the heat exchange process 101, e.g. the opening positions of the valves 104 and 106 and/or the flow rate of the working fluid $\{U (t_i)\}$ and temperature $\{Y (t_i)\}$ are given. The task is now to identify within the model identification block 111 the coefficients or the parameter set of the current model 128 such as to obtain the best fit between the predicted output signal $y_t$ and of the predicted temperature and the measured temperature Y $(t_i)$ for a plurality of time points $t_i$. Thereby, in particular, the model structure 128 is designed such as to provide a reasonable starting model of the heat exchange process 101. To obtain the optimized parameter set 141 an optimization problem is solved, wherein the 2-norm of the estimation error expressed by a cost function is solved.

Thereby, the construction of the model 127 involves three basic steps:

1. A data set of input values or input signals $\{U (t_i), Y (t_i)\}$ .

2. Determination of the order of the model, i.e. $n_A$, $n_B$ and $n_C$.

3. A rule by which candidate models can be assessed using the measurement data (input signals).

The method scheme further comprises application of a database 114 for storing and providing data to the information management system 103.

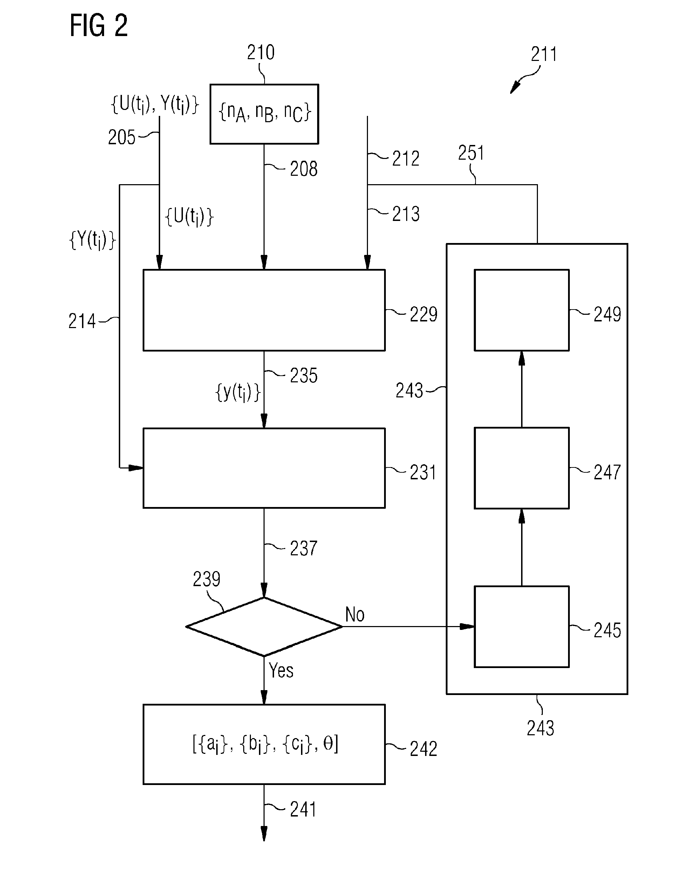

Fig. 2 schematically illustrates a method and an arrangement 211 for defining an ARMAX model according to an embodiment of the present invention. The method/ arrangement 211 scheme illustrated in Fig. 2 corresponds to the function of the model identification block 111 illustrated in Fig. 1. Thus, the method scheme 211 illustrated in Fig. 2 may be considered as a detailed illustration of the model identification block 111 illustrated in Fig. 1. The main steps in the method scheme of Fig. 1 are as follows:

First, the input signals 105, 205 are measured or recorded by the information management system 103 or selected from the database 104. The user then provides the training data 105, 205 representing the input signal to the model identification block 211. Thereby, the model structure 128 has been defined by the user using a priori knowledge of the physical process in block 127.

Thereupon, the model is parametrized by the parameter set and the best fitting parameter set 141 is determined by the model identification block 111. Thereby, the parameter set 141 may be represented as

$$x = (\{a_i\}, \{b_i\}, \{c_i\}, \theta)$$

Thereupon, the model is validated in the model validation block 115.

The model identification module 211 illustrated in Fig. 2 comprises a model output calculation block 229, a cost calculation module 231 and a parameter changer module 243.

The model output calculation module 229 receives the input signal 205, in particular a portion representing a manipulatable variable, i.e. U $(t_i)$ for different time points. Further, the module 229 receives the model order 208 from a block 210. The model output calculation module 229 calculates the predicted output signal 235, which may be for example a predicted temperature and which may be denoted as y $(t_i)$ for different time points $t_i$.

In the cost function calculation block 231 the cost function or model error is determined as a difference between the predicted signal 235 and the measured signal 214 which is also denoted as Y $(t_i)$. The measured signal 214 corresponds in fact to a portion of the input signal 205. The cost function calculation module 231 outputs an error value 237 which is supplied to a decision block 239 which checks one or more stop criteria. The decision 239 may for example check whether the error signal 237 is smaller than a given threshold. If the error value 237 is low enough, then the method proceeds to the block 242 which outputs the optimized parameter set 241.

If the error signal 237 does not meet the stop criteria of the decision block 239 it is branched to the changer module 243. In the changer module 243 the current parameter set 213 is changed, in order to derive an adapted parameter set 251. Thereby, the changer module 243 comprises a mutation module 245, a recombination module 247 and a selection module 249. These three modules within the changer module 243 adjust or adapt the current parameter set 213 in order to minimize the cost function or the model error 237. Thereby, an adapted or changed parameter set 251 is output by the changer module 243 and is supplied to the model output calculation module 229 as (new) current parameter set 213. Thus, in particular, the model output calculation module 229 uses the current parameter set 213 to calculate the predicted output signal 235.

The method continues to adapt or change the current parameter set 213 in an iterative manner, until the error value 237 falls below a predetermined threshold, for example. Initially an initialization parameter set 212 is supplied to the block 229.

The wave identification problem can be formulated as an optimization task where the objective is to find a model and a set of parameters 241 that minimize the prediction error 237 between the measured data 205 and the model output 235. Here, a subclass of evolutionary approach, namely, Differential Evolution (DE) is applied. The algorithms consist of four basic steps:

- initialization
- mutation
- crossover
- selection

First, a fixed number of vectors 212 which forms a population are randomly initialized. This set of vectors 212 contains potential solutions within an n-dimensional search space. Next, this population evolves over time to explore the search space and try to locate the minima of the cost function. At every iteration, which also called generation, new vectors are generated by the combination of vectors randomly chosen from the current population (mutation). The outcoming vectors are then mixed with a pre-determined target vector. This operation is called recombination or crossover and produces the trial vector.

Finally, the trial vector is accepted for the next generation if and only if it yields a reduction in the value of the cost function. The last operation is referred as selection. Each of the four basic steps are given in more details below.

There are several versions of DE which may be employed. They differ only by how new solutions are generated. Here, the classic version (DE/rand/1/bin) may be used. In this shorthand notation, the first term after "DE" specifies how the base vector is chosen and it means that the base vectors are randomly chosen. The number that follows indicates how many vector differences are used. The DE version that uses uniform crossover is appended with the additional term "bin" for "binomial" or uniform distribution.

To establish a starting point for the optimization process, an initial population 212 must first be created.

Typically, each decision parameter in every vector of the initial population is assigned a randomly chosen value from within its corresponding feasible bounds,

$$x_{0,j} = x_j^{(lo)} + rand[0,1] \bullet (x_j^{(up)} - x_j^{(lo)})$$

where $x_j^{(up)}$ and $x_j^{(lo)}$ are the upper and lower bound to the jth decision parameter, respectively. After that the initial population is created, it evolves through the operation ofmutation, crossover and selection.

Mutation generally refers to an operation that adds a uniform random variable to one or more vector parameters. The DE relies upon the population itself to supply increments of the appropriate magnitude and orientation. At every generation g, each vector in the population has to serve once a target vector. For each target vector $x_{g,j}$ a mutant vector is generated according to:

$$m_j = x_{g,r3} + \gamma(x_{g,r1} - x_{g,r2})$$

where $x_{g, r1}$, $x_{g, r2}$, $x_{g, r3}$ are randomly chosen vectors from the set {1,..., N}, N is the population size, y being within the interval (0,1] is the mutation scaling factor, and the subscript g denotes the generation number.

To increase the diversity of the generated vectors, the crossover operation is introduced, Finally, the trial vector $u_{g+1, j}$ is created by mixing the parameter of the parent vector $x_{g,j}$ and the mutant vector $m_j$ in the following form,

$$u_{g+1,j} = \{m_j \quad \text{if } rand_j[0,1] \vee j = j_r\}$$
$$u_{g+1,j} = \{x_{g,j} \quad otherwise\}$$

where $rand_j [0,1)$ generates a new uniformly distributed random number for each value of the j within the range of [0,1), $p_r$ is known as a crossover rate. The index $j_r$ is randomly chosen from the set {1, ..., D}, which is used to ensure that $u_{g+1, j}$ gets at least one parameter from $m_j$. The index D shows the number of the parameters.

To decide whether or not it should become a member of the next generation, the trial vector $u_{g+1, j}$ is compared to the target vector $x_{g,j}$ using a cost function value criterion. An individual (vector) with a minimum value of cost-function is allowed to advance to the next generation, i.e. $x_{g+i,j} = u_{g+1, j}$, if $F_{DE} (u_{g+1,j}) \le F_{DE} (x_{g+1,j})$, else $x_{g+1,j} = x_{g,j}$, where, $F_{DE}$ ( . ) indicates the cost function and $x_{g+1,j}$ is the next generation of vector $x_{g,j}$. By using this selection procedure, all individuals of the next generation are as good as or better than the individuals of the current population.

Further, identification of characteristics of sea wave using DE is applied. Given data 205 {U ($t_i$), Y ($t_i$)} the output of the model {y ($t_i$)} using the current parameter set 213 is then calculated and compared with the experimental data (Y ($t_i$)) (a portion of the input data 205). A cost function is then applied to calculate the quality of {y ($t_i$)} compared to {Y($t_i$)}. Here, the 2-norm is used as the cost function, i.e. E = sqrt (abs (Y ($t_i$) - y ($t_i$))). This forms an optimization problem which is solved by using DE.

Calculation of cost function is performed as follows in component 231. There are many ways to define a cost function for this problem. Here, the 2-norm of the estimation error is used, i.e.

$$E = \frac{1}{2} \sum_{i=1}^{M} \|Y(t_i) - y(t_i)\|^2$$

$$E = \frac{1}{2M} \sum_{i=1}^{M} \left\| Y(t_i) - y(t_i) \right\|^2$$

where $\| . \|$ denotes the 2-norm of a vector, $\{Y(t_i)\}$ is the data from the sensor at time $t_i$, $\{y(t_i)\}$ is the output of the model at time $t_i$, and M denotes the number of samples (i.e. the length of the data series).

Then, solving optimization problem using Differential Evolution is performed in component 233. This component solves the optimization problem using Differential Evolution algorithms, i.e.

$$x^{opt} = \min_{x} E(x)$$

where the cost function E(x) is defined above,

$$x = (\{a_i\}, \{b_i\}, \{c_i\}, \theta)$$

and $x_{opt}$ (reference numeral 241 in Fig. 2) is the optimal solution of the problem. As discussed above, DE is an iterative search technique consisting of four basic steps: initialization, mutation, crossover, and selection described above.

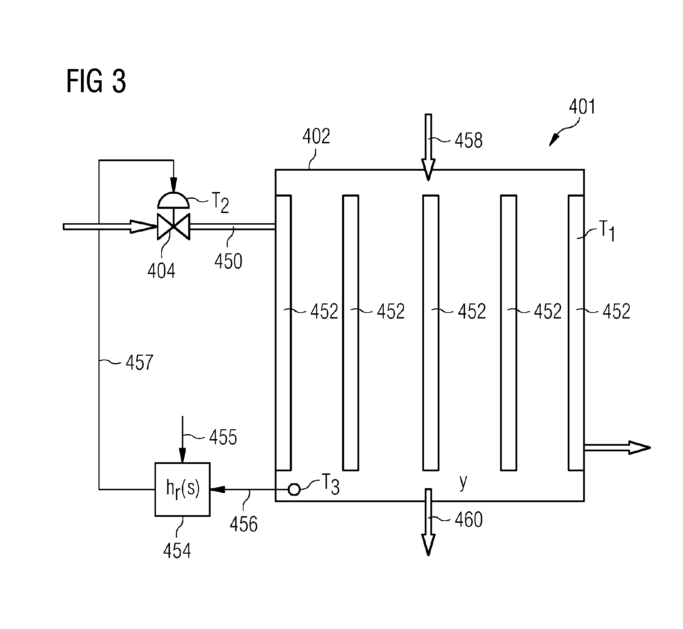

Fig. 3 schematically illustrates the heat exchange process 101 illustrated in Fig. 1 in more detail as a process 401. In particular, a heat exchanger 402 receives via a valve 404 a stream of a hot (working) liquid 450 which is supplied into heat exchanging pipes 452. Thereby, a controller 454 (receiving a reference 455) controls the temperature $T_2$ of the supplied hot liquid 450 by sending control signals via control line 457. Further, the controller 454 receives a measurement signal 456 regarding the temperature $T_3$ within the heat exchanger 402. The process 401 is provided for heating a cold liquid 458 to a hot liquid 460 having a predetermined temperature which is denoted as y. Further, the temperature $T_1$ of the heat exchange pipes 452 is measured and supplied to the information management system 103 illustrated in Fig. 1. The problem to be solved is to adjust the opening position of the valve 404 such that the temperature y of the hot liquid 460 corresponds to a desired temperature.

The heat exchange process 401 illustrated in Fig. 3 is modeled using a model structure 127,128 illustrated in Fig. 1 and the parameters of the model 127,128 are determined using the model identification module 111 or 211 illustrated in Figs. 1 and 2.

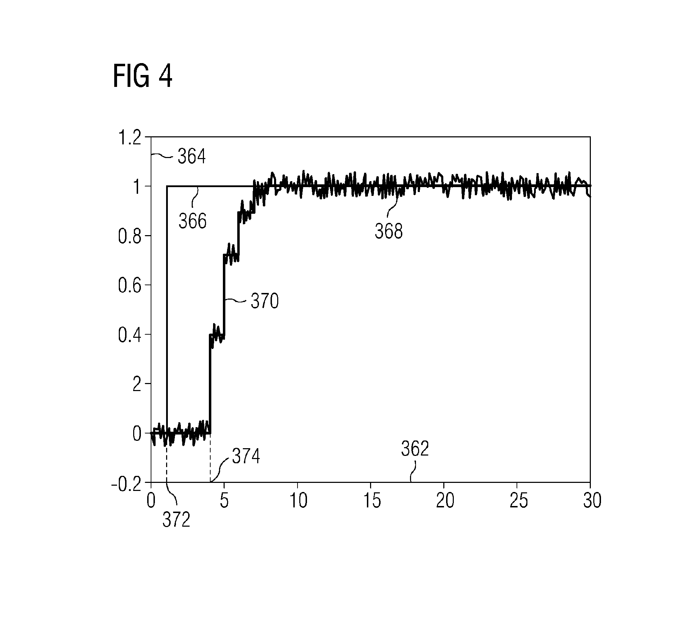

Fig. 4 illustrates curves considered during a method according to an embodiment of the present invention. At an abscissa 362 the time is indicated in seconds. On the ordinate 364 the valve position is indicated as a curve 366, the measured temperature Y is indicated as a curve 368 and the predicted temperature y is indicated as a curve 370. As can be seen from Fig. 4 the valve position 366 goes on at a time point 372 and stays then on (allowing flow of the hot stream 450 illustrated in Fig. 3). At the time point 374 and beyond the time point 374 the measured temperature 368 increases rapidly from zero to a desired value. Resembling the time course of the measured temperature signal 368 also the predicted temperature 370 increases in a stepwise manner until the desired temperature value. Thus, the predicted temperature course very much resembles the measured temperature course proving that the method is capable of accurately determining the optimized parameter set of the ARMAX model.

The estimated model using differential evolution is given as:

$$y_t - 0.8000548229\, y_{t-1} + 0.2000364219\, y_{t-2} = 0.3999811537\, u_{t-10}$$

Thereby, the cost value or the cost function or the error value 337 amounts to 0.0205 indicating a good correspondence and accurate fit of the measurement data.

In fact, the expected equation is:

$$Y_t - 0.8Y_{t-1} + 0.2Y_{t-2} = 0.4U_{t-\theta t} + e_t$$

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for defining an ARMAX model for deriving a predicted output signal (235, $y_t$), the ARMAX model being parametrized by a parameter set, the method comprising:

   obtaining an input signal (105, 205, {U (ti), Y (ti)});
   adapting the parameter set (213, $\{a_i\}$, $\{b_i\}$, $\{c_i\}$, $\theta$) using differential evolution, in order to obtain an optimized parameter set.

2. Method according to claim 1, wherein the ARMAX model derives the predicted output signal (235, $y_t$) at the time index (t) according to the equation:

$$y_t = -\sum_{i=1}^{n_A} a_i y_{t-i} + \sum_{i=1}^{n_B} b_i u_{t-i-\theta} + e_t + \sum_{i=1}^{n_C} c_i e_{t-i}$$

   wherein $u_{t-i-\theta}$ is a manipulated variable at time index t-i-$\theta$, and $e_{t-i}$ is an error term at time index t-i,
   wherein ($\{a_i\}$, $\{b_i\}$, $\{c_i\}$, $\theta$) form the parameter set of the ARMAX model,
   wherein $n_A$, $n_B$, $n_C$ represent orders of the ARMAX model, wherein $\theta$ represents a time delay.

3. Method according to any one of the preceding claims, wherein the adapting the parameter (213) set comprises initializing the parameter set (212) and/or mutating (245) the parameter set and/or performing a crossover (247) of parameters of the parameter set and/or selecting (249) mutated parameters.

4. Method according to one of the preceding claims, further comprising considering and/or setting a plurality of parameter sets (213), wherein each parameter set enables to define a parametrized model from which a corresponding predicted output signal can be derived.

5. Method according to claim 4, wherein the adapting the parameter set comprises solving an optimization problem, in particular by minimizing a cost function (E), the cost function being dependent on a difference between the predicted output signal ($y_t$) of the model parametrized with one of the plurality of parameter sets and a portion (214, Y ($t_i$)) of the input signal (205).

6. Method according to claim 5, wherein the portion (214) of the input signal (205) comprises measurement information across plural different time points (ti) and the predicted signal comprises prediction information across the plural different time points.

7. Method according to claim 5 or 6, wherein the cost function (E) is proportional to a norm of the difference, in particular an Euclidian norm.

8. Method according to one of claims 4 to 7,
   wherein the setting the plurality of parameter sets comprises randomly setting parameters comprised in each parameter set within predetermined bounds.

9. Method according to one of claims 5 to 8, wherein the adapted parameter (241) set is selected (239), if the cost function (E) evaluated on the adapted parameter set (241) is smaller than the cost function evaluated on the parameter set (213) before the adapting.

10. Method according to one of the preceding claims,
    wherein the adapting the parameter set comprises adding a uniformly distributed random variable to at least one parameter comprised in the parameter set to obtain a mutated parameter.

11. Method according to one of the preceding claims,
    wherein the adapting the parameter set comprises changing all parameters comprised in the parameter set.

12. Method for controlling and/or performing a technical process during oil drilling/exploration/delivery and/or gas drilling/ exploration/delivery, in particular offshore, and/or subsea and/or maritime exploration using the model defined according to one of the preceding claims.

13. Method according to claim 12, wherein the technical process is a delivery process and/or a separation process and/or a heat exchange process (101, 401) and/or valve control process and/or motor drive process and/or a cooling process.

14. Arrangement (111, 211) for defining an ARMAX model for deriving a predicted output signal ($y_t$), the ARMAX model being parametrized by a parameter set, the arrangement comprising:

    in input terminal adapted to obtain an input signal (105, 205, $\{U(t_i), Y(t_i)\}$);
    a processor (111, 211) adapted to adapt the parameter set (213, 241, $\{a_i\}, \{b_i\}, \{c_i\}, \theta$) using differential evolution, in order to obtain an optimized parameter set.

## FIG 1

$\{U(t_i), Y(t_i)\}$

$[\{a_i\}, \{b_i\}, \{c_i\}, \theta]$

No

Yes

# FIG 2

$\{U(t_i), Y(t_i)\}$

210

$\{n_A, n_B, n_C\}$

211

205

208

212

251

$\{U(t_i)\}$

213

$\{Y(t_i)\}$

214

229

235

$\{y(t_i)\}$

249

243

231

247

237

239

No

245

Yes

$[\{a_i\}, \{b_i\}, \{c_i\}, \theta]$ — 242

243

241

FIG 3

FIG 4

**EUROPEAN SEARCH REPORT**

Application Number

EP 11 19 0237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG ZIBO ET AL: "Application of genetic algorithms to system identification", EVOLUTIONARY COMPUTATION, 1995., IEEE INTERNATIONAL CONFERENCE ON PERTH, WA, AUSTRALIA 29 NOV.-1 DEC. 1995, NEW YORK, NY, USA,IEEE, US, vol. 2, 29 November 1995 (1995-11-29), pages 777-782, XP010156367, DOI: 10.1109/ICEC.1995.487484 ISBN: 978-0-7803-2759-7 | 1-11,14 | INV. G05B13/04 |
| Y | * the whole document * | 12,13 | |
| A | TEA TUAA AR ET AL: "Differential Evolution versus Genetic Algorithms in Multiobjective Optimization", 5 March 2007 (2007-03-05), EVOLUTIONARY MULTI-CRITERION OPTIMIZATION; [LECTURE NOTES IN COMPUTER SCIENCE;;LNCS], SPRINGER BERLIN HEIDELBERG, BERLIN, HEIDELBERG, PAGE(S) 257 - 271, XP019077276, ISBN: 978-3-540-70927-5 * abstract * * Section 6 "Conclusion" * | 1 | |
| Y | FESMI ABDUL MAJEED ET AL: "Analysis of the method of Black box modeling of drill string dynamics by least squares method", MECHANICAL AND ELECTRICAL TECHNOLOGY (ICMET), 2010 2ND INTERNATIONAL CONFERENCE ON, IEEE, PISCATAWAY, NJ, USA, 10 September 2010 (2010-09-10), pages 257-261, XP031773181, ISBN: 978-1-4244-8100-2 * the whole document * | 12,13 | TECHNICAL FIELDS SEARCHED (IPC)  G05B |

-/--

The present search report has been drawn up for all claims

| Place of search | Date of completion of the search | Examiner |
|---|---|---|
| Munich | 20 April 2012 | Marrone, Fabrizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 597 539 A1**

<table>
<tr><td colspan="2" align="center"></td><td align="center">EUROPEAN SEARCH REPORT</td><td align="center">**Application Number**<br>EP 11 19 0237</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STORN RAINER ET AL: "Differential Evolution - A Simple and Efficient Heuristic for Global Optimization over Continuous Spaces", JOURNAL OF GLOBAL OPTIMIZATION, KLUWER, DORDRECHT, NL, vol. 11, no. 4, 1 December 1996 (1996-12-01), pages 341-359, XP008124915, ISSN: 0925-5001 * page 1, line 1 - page 7, line 2 * ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 20 April 2012 | Marrone, Fabrizio |

EPO FORM 1503 03.82 (P04C01)